# EUROPEAN PATENT APPLICATION

(11) **EP 2 299 432 A1**
(43) Date of publication of application: **23.03.2011**
(21) Application number: 09761237.8
(22) Date of filing: 20.01.2009
(51) Int. Cl.: G09G 3/34, G09G 3/36, G02F 1/133, H04W 88/02, H04M 1/22

(54) **BACKLIGHT CONTROL METHOD FOR ELECTRONIC DISPLAY DEVICE**

(30) Priority: 13.06.2008 CN 200810067840
(71) Applicant: TCL Communication Technology Holdings Ltd., Guangdong 518067 (CN)
(72) Inventor: LU, Yansheng, Shenzhen Guangdong 518067 (CN)
(74) Representative: Brachmann, Roland W.
(86) International application number: PCT/CN2009/000080
(87) International publication number: WO 2009/149612

(57) **Abstract**

A backlight control method of an electronic display device involves the following steps: monitoring whether a user triggers a backlight control signal, and detecting whether a backlight is turned on, and carrying out the corresponding backlight control based on the backlight control signal that triggered by a user. The backlight control method could instantaneously control the backlight of the electronic display device base on a requirement of the user.

## Description

### Technical Field

The present invention falls into the field of backlight control of electronic display devices. In particular, it relates to a method for controlling the backlight of an electronic display device at any time based on need.

### Background Technology

With constant development in display technology, many devices have begun to use electronic display devices to complete display functions, for example, cell phones, digital cameras and liquid crystal TV's, etc., that use LCD displays. The electronic display devices of most of the aforementioned apparatuses need to be equipped with an appropriate backlight module to complete the display. On the other hand, out of consideration for saving energy and for prolonging the lifecycle of the display devices, as well as the requirement for increasing the duration of use of portable electronic apparatuses, many electronic devices with backlight modules have a function to automatically turn off backlight. Thus, when an electronic apparatus is not working, the system can automatically turn off the backlight after a preset time (or first lower the brightness of the backlight before turning off the backlight). Typically, for example, cell phones are used quite extensively now as a very popular mobile communications apparatus. The cell phone users would like to prolong the duration of use of a cell phone after being recharged as much as possible. Therefore, most cell phones have the function to automatically turn off the backlight. As long as the user has set the waiting time for automatically turn off the backlight in the system (for example, 3 minutes), if the user does not perform any operation on the cell phone during this preset waiting time (for example, it is entirely in a standby state) or the user can accomplish some cell phone functions without the use of the backlight (for example, he is just using the cell phone to listen to music or radio), then the cell phone will automatically turn off the backlight, to reduce the energy consumption of the cell phone battery and prolong the duration of use of the cell phone. At the same time, the lifecycle of the backlight module can also be prolonged.

However, considering the actual circumstances of the use of a cell phone, the user may need some time during the use of his cell phone to think (for example, while sending a text message, the user may think for 20 seconds between two entries of text), the waiting time that can be set in a cell phone for automatically turning off the backlight cannot be too short. Otherwise, this will cause inconvenience for the user. For example, in extreme circumstances, if the cell phone system permits the user to set the waiting time for turning off the backlight to 1 second or even shorter, once the user really sets the waiting time for turning off the backlight in the cell phone system to 1 second, then each second that the user does not perform an operation, it may cause the backlight on his cell phone to turn off. This will cause the user great inconvenience. Therefore, the existing cell phones generally set the minimum waiting time for automatically turning off the backlight to more than 5 seconds, in order to avoid the occurrence of the abovementioned issue. However, in many circumstances, for example, when the user only takes out his cell phone to view the time, the user's look at the cell phone screen is less than one second, but the cell phone still has to wait at least 4 seconds or longer before automatically turning off the backlight. Thus, the utilization rate of energy is very low.

On the one hand, energy needs to be saved as much as possible; on the other hand, ease of use must be provided to the user. Such a conflict has not been resolved by existing cell phones. Of course, the aforementioned problems and conflicts also exist in other similar electronic devices. Therefore, it is indeed necessary to provide a backlight control method for electronic display devices.

### Summary of the Invention

The purpose of the present invention is to provide a backlight control method for electronic display devices in order to resolve the technical issue of the inability to turn off the backlight of electronic display devices at any time in the existing technology.

The backlight control method for electronic display devices provided by the present invention comprises the following steps:
- Step a, monitoring whether the user has triggered a backlight control signal;
- Step b, testing whether a backlight has been turned on; and
- Step c, based on the backlight control signal triggered by the user, performing an appropriate backlight control.

The aforementioned electronic device is a cell phone.

The aforementioned backlight control signal is a signal to "turn off the backlight".

The aforementioned backlight control signal is a signal to "lower the backlight".

The aforementioned backlight control signal is triggered by a dedicated key.

The aforementioned backlight control signal is triggered by a key customized by the user.

The aforementioned backlight control signal is triggered by way of voice control.

The aforementioned test as to whether the backlight has been turned on is achieved by monitoring the interface that calls a platform. If the backlight is on, then the result is 0, otherwise the result is -1.

The backlight control method for an electronic display device provided by the present invention can promptly control the backlight of an electronic display device according to user requirements. In particular, it can promptly turn off the backlight, thus effectively saving energy and prolonging the lifecycle of the electronic display device.

### Captions for the Diagrams

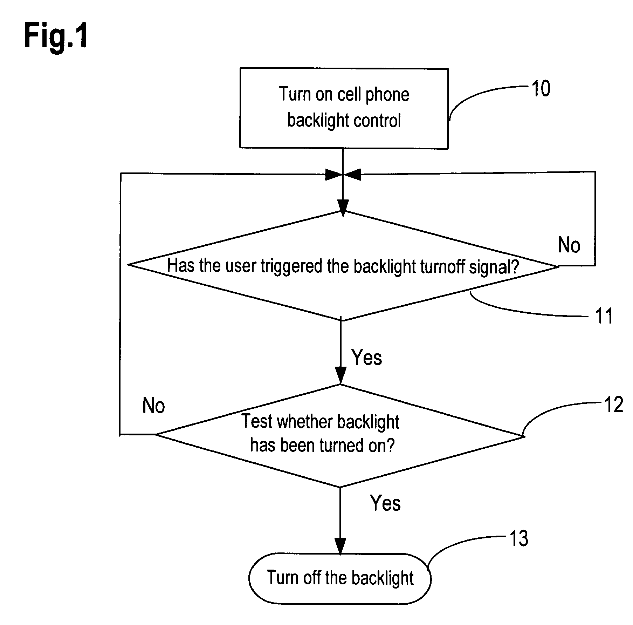

- Fig. 1: is a process chart for the backlight control method for an electronic display device in the present invention.

### Specific Embodiment Method

To make the purpose and the advantages of the technical solution of the present invention clearer and more understandable, the following is a further and more detailed description of the present invention in light of the diagrams and embodiments. It should be understood that the specific embodiment described herein should only be used to construe the present invention and should not be used to limit the present invention.

Referring to the illustration in **Fig.1** and taking a cell phone as an example, a preferred embodiment of the backlight control method for an electronic display device in the present invention comprises the following steps:

Step 10: Turn on the cell phone backlight control. In the present embodiment, the user may manually select whether to use backlight control or not to use backlight control. If the user has set to use the backlight control method described in the present invention, then enter step 11.

Step 11: Monitor whether the user has triggered the backlight control signal. The backlight control signal can be "turn off the backlight" or "lower the backlight," etc. In the present embodiment, the assumption is that what the user sends out is a backlight control signal to "turn off the backlight." In the present embodiment, the backlight control signal can be triggered while the cell phone is in any state, for example, a standby state, an audio play state or a game operating state. In the present embodiment, the backlight control signal can be triggered by a dedicated key or triggered by a certain key customized by the user or even triggered by way of voice control (in a cell phone with voice control functions), which will be introduced in greater detail below. If the user does not trigger a backlight control signal, then repeat step 11. If the user triggers a backlight control signal, then implement step 12.

Step 12: Test whether the backlight has been turned on. If the backlight is not in a turned on state, then return to implementation of step 11. If the backlight is in a turned on state, then implement step 13 and turn off the backlight. The method to determine whether backlight has been turned on is known in the art to a general technician in the present field. For example, a flag can be set when the cell phone backlight is on. When the backlight is turned off, the flag is cleared. Thus, if there is a desire to know the current cell phone backlight state, just check the flag. Using the computer language C as an example, when testing whether the backlight has been turned on can be achieved by an interface to call the platform. The following shows the monitoring function:

```
        Int CheckBacklight_OnOff ()
        {
               Int result = 0;
               // This is the interface to call the platform. Obtain
               the backlight state
               Return result;
                       // If the backlight is on, then
                       result = 0. Otherwise, result = -1.
        }
```

Therefore, when making a determination of whether backlight has been turned on, such a determination can be made based on the return value of the above function.

Similarly, the method to turn off the backlight is also an art known to a general technician in the present field. For example, the interface provided by the system to turn off the backlight can be directly called to accomplish turning off the backlight, so no unnecessary details are needed here.

The following shows an example for illustration purposes. If a key customized by a user is used to turn off the backlight, then in a standby state, the backlight may be turned off by pressing the end talk key for a short time; in a state of audio play, the backlight may be turned off by pressing the pause key for a long time, without stopping audio play; in a state of game operations, the pause key can be pressed for a short time to pause the game, while at the same time turning off the backlight. The abovementioned methods accomplish the prompt turning off the backlight by pressing some keys designated by the user and of course, a dedicated key may also be set (for example, by setting a dedicated key on the side of the cell phone) to accomplish the function of promptly turning off the backlight.

It needs to be emphasized there that in the above embodiment it was assumed that the user issued a "turn off the backlight" command. If the user issues a "lower the backlight command," then the backlight control method for an electronic display device described in the present invention can also lower the brightness of the backlight based on the user's command. For example, when a cell phone will be soon out of power and the user cannot recharge but still needs it to operate, he may lower the brightness of backlight as appropriate by lowering the backlight to save as much electric energy as possible, thus prolonging the duration to use the cell phone.

Therefore, the backlight control method for an electronic display device in the present invention can be summarized by the steps:
- Step a, monitoring whether the user has triggered a backlight control signal;
- Step b, testing whether a backlight has been turned on; and
- Step c, based on the backlight control signal triggered by the user, performing an appropriate backlight control.

The above description is only a preferred embodiment of the present invention and cannot be used to limit the present invention. Any change, equivalent replacement and improvement, etc., within the spirit and principles of the present invention should be included in the scope of protection for the claims of the present invention.

## Claims

1. A backlight control method for an electronic display device, comprising:
- monitoring whether the user has triggered a backlight control signal;
- testing whether a backlight has been turned on; and
- performing an appropriate backlight control based on the backlight control signal triggered by the user.

2. The backlight control method for an electronic display device according to claim 1, wherein the electronic device is a cell phone.

3. The backlight control method for an electronic display device according to claims 1 or 2, wherein the backlight control signal is a signal to turn off the backlight.

4. The backlight control method for an electronic display device according to claims 1 or 2, wherein the backlight control signal is a signal to lower the backlight.

5. The backlight control method for an electronic display device according to claim 1 or 2, wherein the backlight control signal is triggered by a dedicated key.

6. The backlight control method for an electronic display device according to claims 1 or 2, wherein the backlight control signal is triggered by a key customized by the user.

7. The backlight control method for an electronic display device according to claims 1 or 2, wherein the backlight control signal is triggered by way of voice control.

8. The backlight control method for an electronic display device according to claims 1 or 2, wherein the step of testing whether the backlight has been turned on is achieved by monitoring an interface that calls a platform, wherein if the backlight is on, then the result is 0, otherwise the result is -1.
